# EUROPÄISCHE PATENTSCHRIFT

(11) **EP 3 634 832 B1**
(45) Veröffentlichungstag und Bekanntmachung des Hinweises auf die Patenterteilung: **26.01.2022**
(21) Anmeldenummer: 18731981.9
(22) Anmeldetag: 06.06.2018
(51) Int. Cl.: B62D 1/16, B62D 5/00, B62D 5/06

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 08.06.2017 DE 102017209664
(43) Veröffentlichungstag der Anmeldung: 15.04.2020
(73) Patentinhaber: thyssenkrupp Presta AG, 9492 Eschen (LI); thyssenkrupp AG, 45143 Essen (DE)
(72) Erfinder: FORTE, Sebastian, 9493 Mauren (LI); GALEHR, Robert, 9486 Schaanwald (LI)
(74) Vertreter: thyssenkrupp Intellectual Property GmbH
(86) Internationale Anmeldenummer: PCT/EP2018/064898
(87) Internationale Veröffentlichungsnummer: WO 2018/224549

(56) Entgegenhaltungen:
- WO-A1-2016/071270
- WO-A2-2008/120231
- DE-A1- 10 159 330
- DE-B3-102013 014 137

## Beschreibung

Die Erfindung betrifft eine Lenksäule für ein Kraftfahrzeug, umfassend eine um eine Längsachse in einem Lenksäulengehäuse drehbar gelagerte Lenkwelle und einen Umdrehungsbegrenzer.

Derartige Systeme werden besonders bei Steer-by-wire-Lenksystemen eingesetzt.

Steer-by-Wire Lenksäulen zeichnen sich dadurch aus, dass keine mechanischen Verbindungen zwischen dem Lenkrad und dem lenkbaren Rädern existiert. Um die Lenkrotation jedoch auch ohne mechanische Verbindung zwischen dem Lenkrad und den lenkbaren Rädern zu begrenzen, ist es erforderlich, dass ein Anschlag in Rotationsrichtung vorgesehen ist, der die Rotation des Lenkrades begrenzt. Dabei ist es üblich dass mehr als eine Umdrehung des Lenkrades erforderlich ist um von Anschlag zu Anschlag zu lenken.

Aus der DE 103 12 516 A1 ist eine Lenksäule mit Umdrehungsbegrenzung bekannt, wobei zwei Scheiben mit jeweils einer Spiralbahn versehen sind und zwischen den Spiralbahnen eine Kugel angeordnet ist. Die Kugel verlagert sich bei der Lenkwellenrotation in den Spiralbahnen. Diese bekannte Lösung hat den Nachteil einer hohen Toleranzanfälligkeit, den Toleranzen führen dazu, dass die Kugeln in den Spiralbahnen klappern und sich verklemmen können.

Eine gattungsgemäße Lenksäule ist in der WO 2016/071270 A1 beschrieben.

Aufgabe der Erfindung ist es, eine Lenksäule mit Umdrehungsbegrenzung anzugeben, die einen sicheren Betrieb gewährleistet und eine geringe Klapperneigung aufweist.

Gelöst die Aufgabe durch die Merkmale des Patentanspruchs 1. Vorteilhafte Ausführungsformen sind in den Unteransprüchen beschrieben.

Bei der erfindungsgemäßen Lenksäule weist der Umdrehungsbegrenzer zwei gegensinnige Flachspiralfedern auf, die wirkungsmäßig zwischen einem auf der Lenkwelle drehfest angeordneten Kopplungsteil und dem Lenksäulengehäuse angeordnet sind, und die in axialer Richtung nebeneinander angeordnet sind. Mit anderen Worten weist der Umdrehungsbegrenzer eine erste Flachspiralfeder und eine der ersten Flachspiralfeder gegensinnige zweite Flachspiralfeder auf, wobei die erste Flachspiralfeder wirkungsmäßig zwischen einem auf der Lenkwelle drehfest angeordneten Kopplungsteil und dem Lenksäulengehäuse angeordnet ist und die zweite Flachspiralfeder wirkungsmäßig zwischen dem auf der Lenkwelle drehfest angeordneten Kopplungsteil und dem Lenksäulengehäuse angeordnet ist. Dreht der Fahrer an der Lenkwelle, so dreht sich das Kupplungsteil in dieselbe Richtung und wickelt dabei eine der beiden Flachspiralfedern auf, bis deren Windungen fest aufeinander liegen und die Flachspiralfeder auf Block geht. Die weitere Belastung der Flachspiralfeder in derselben Drehrichtung erfolgt dann auf Zug, wodurch eine weitere Drehung der Lenkwelle verhindert wird. Somit wird der maximale Lenkwinkel begrenzt. Genauso funktioniert der Umdrehungsbegrenzer in der entgegengesetzten Drehrichtung mit dem Unterschied, dass jetzt die andere Flachspiralfeder aufgewickelt wird, bis sie auf Block geht und eine weitere Drehung in der entgegengesetzten Drehrichtung verhindert.

Erfindungsgemäß ist vorgesehen, dass das Kupplungsteil einen mit der Lenkwelle koaxialen, äußeren zylindrischen Koppelabschnitt aufweist, auf dem die beiden gegensinnigen Flachspiralfedern in axialer Richtung nebeneinander angeordnet sind, und dass jeweils ein inneres Ende der Flachspiralfedern am Koppelabschnitt befestigt ist. Die äußere zylindrische Oberfläche des Kuppelabschnitts ist an die runde Form und den Durchmesser der Flachspiralfedern angepasst. Der Umfang des zylindrischen Koppelabschnitts bestimmt dabei den zurückgelegten Weg des am Koppelabschnitt befestigten inneren Endes der jeweiligen Flachspiralfeder im Verhältnis zum Drehwinkel der Lenkwelle und das am jeweiligen Anschlag der Flachspiralfedern maximal zur Verfügung stehende Gegendrehmoment, welches die Drehung stoppt.

In einer vorteilhaften und einfachen Ausgestaltung der Erfindung ist der Koppelabschnitt mit einem schlitzförmigen Durchbruch versehen, in den jeweils ein umgebogenes inneres Ende der Flachspiralfedern eingreift. Durch diese einfachen Maßnahmen kann eine sichere Befestigung der Flachspiralfedern auf dem Koppelabschnitt gewährleistet werden, die auch in der Lage ist, das für die Drehbegrenzung erforderliche Gegendrehmoment aufzubringen.

In weiterer vorteilhafter Ausgestaltung weist das Kopplungsteil einen hülsenförmigen, auf die Lenkwelle axial aufschiebbaren inneren Wellenabschnitt auf, der auf seiner der Lenkwelle zugewandten Innenseite ein zu einem äußeren Profil der Lenkwelle komplementäres Profil aufweist. Um das Kopplungsteil drehmomentschlüssig mit der Lenkwelle zu verbinden und die zum Begrenzen der Drehbewegung erforderlichen Gegendrehmomente aufzubringen, kann die Lenkwelle mit einem nicht rotationssymmetrischen Außenprofil versehen sein, an welches das komplementäre Innenprofil des inneren Wellenabschnitts des Kopplungsteils angepasst ist. Alternativ oder zusätzlich kann auch eine kraftschlüssige oder stoffschlüssige Verbindung zwischen der Lenkwelle und dem Kupplungsteils denkbar und möglich.

In vorteilhafter Weise ist der Umdrehungsbegrenzer in einem der Fahrzeugfront zugewandten Endbereich der Lenksäule angeordnet. Hier ist der Umdrehungsbegrenzer leicht zugänglich und kann auf besonders einfache Weise montiert und gewartet werden.

Eine weitere vorteilhafte Ausgestaltungsform in der Erfindung sieht vor, dass die äußeren Enden der Flachspiralfedern mittels Schrauben an einem Deckelteil befestigt sind, welches seinerseits mit einem im Endbereich angeordneten Befestigungsflansch der Lenksäule fest verbunden ist. Das Kopplungsteil mit den beiden Flachspiralfedern kann daher im Deckelteil vormontiert werden, indem die beiden Flachspiralfedern zunächst auf dem Kopplungsteil angeordnet und danach mittels der Schrauben am Deckelteil angeschraubt werden. Der so vormontierte Umdrehungsbegrenzer kann dann als Ganzes auf einfache Weise an der Lenksäule angebracht werden, indem man den Wellenabschnitt des Kopplungsteils über die Lenkwelle schiebt und das Deckelteil mit dem Befestigungsflansch der Lenksäule verbindet.

In einer bevorzugten Ausführungsform sind die Flachspiralfedern in ihrer Länge so bemessen sind, dass sie jeweils einen Lenkradeinschlag in einem Bereich zwischen 360° und 720° nach rechts und nach links erlauben. Dies bedeutet, dass ein Lenkradeinschlag ausgehend von der Mittellage, d.h. der Geradeausstellung der Lenkwelle, nach links in einem Bereich zwischen 360° und 720° durch die Länge der einen Flachspiralfeder gestattet ist und nach rechts im Bereich zwischen 360° und 720° durch die Länge der anderen Flachspiralfern gestattet ist.

In einer besonders bevorzugten Ausführungsform der Erfindung sind die Flachspiralfedern in ihrer Länge so bemessen, dass sie jeweils einen Lenkradeinschlag von 540° nach rechts und nach links erlauben. Dieser Lenkradeinschlag entspricht dem einer herkömmlichen direkt mechanisch wirkenden Lenksäule.

Bevorzugt weisen die Flachspiralfedern zumindest eine abschnittsweise lineare Federcharakteristik auf. Dadurch kann ein verbessertes Lenkgefühl bereitgestellt werden.

Bevorzugt weisen die Flachspiralfedern eine identische Federcharakteristik auf. Dadurch kann erreicht werden, dass ein Lenkeinschlag in die eine Richtung den gleichen Kraftverlauf/Drehmomentenverlauf aufweist wie der Lenkeinschlag in die der einen Richtung entgegengesetzte Richtung. Somit kann eine Kompensation zwischen der ersten Flachspiralfeder und der zweiten Flachspiralfeder stattfinden, wenn eine der Flachspiralfedern aufgewickelt und die andere Flachspiralfeder abgewickelt wird, so dass ein gleicher Widerstand beim Lenken wahrgenommen wird oder mit anderen Worten das Lenkmoment konstant ist. Zur Verbesserung des Verhaltens der Flachspiralfedern beim Aufwickeln und Abwickeln kann der Fachmann sich Maßnahmen bedienen, die aus Laufwerken für Grammophone (mechanisch-angetriebene Tonträgerwiedergabevorrichtungen) bekannt sind.

Ein Ausführungsbeispiel der Erfindung wird nachfolgend anhand der Zeichnungen näher erläutert. Die Figuren zeigen im Einzelnen:
- Figur 1:: eine Prinzipdarstellung eines Steer-by-Wire Lenksystems;
- Figur 2:: eine perspektivische Darstellung einer erfindungsgemäßen Lenksäule mit Umdrehungsbegrenzer;

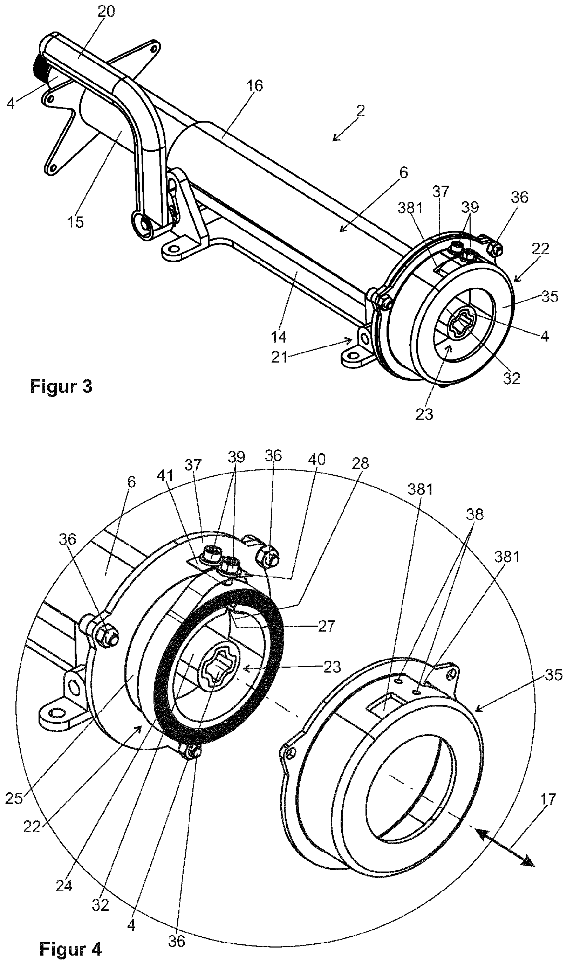

- Figur 3:: eine perspektivischer Darstellung der Lenksäule von Figur 2, jedoch aus der entgegengesetzten Richtung gesehen;
- Figur 4:: ein vergrößertes Detail aus Figur 3 mit abgenommenen Deckelteil
- Figur 5:: eine Explosionsdarstellung des Umdrehungsbegrenzers;
- Figur 6:: ein vergrößertes Detail aus Figur 5;

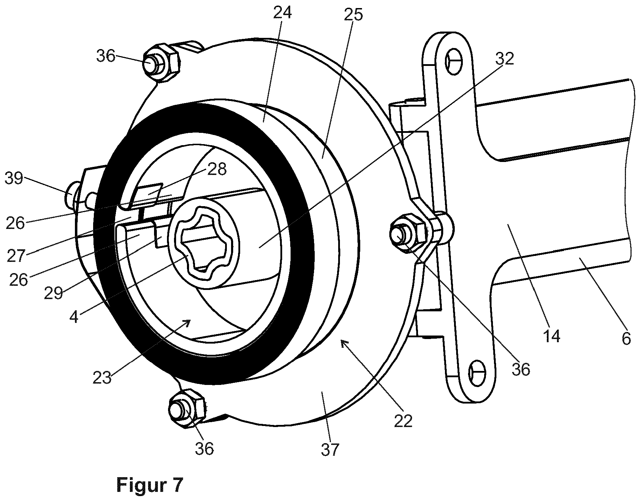

- Figur 7:: eine perspektivische Darstellung des Umdrehungsbegrenzer aus einer anderen Blickrichtung.

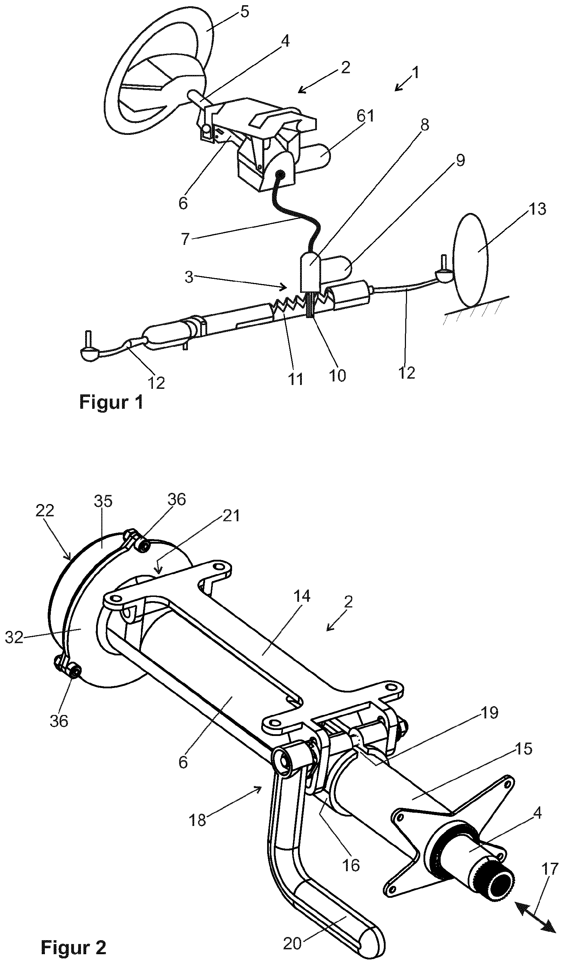

Figur 1 zeigt ein Steer-by-Wire Lenksystem 1 für ein Kraftfahrzeug mit einer Lenksäule 2 und einer Lenkbetätigung 3. Die Lenksäule 2 umfasst eine Lenkwelle 4, die an einem Ende ein Lenkrad 5 trägt und die zum größten Teil in einem Lenksäulengehäuse 6 angeordnet ist, in welchem ein nicht gezeigter Drehgeber für die elektronische Ansteuerung der elektrischen Lenkbetätigung 3 untergebracht ist. Weiterhin ist im Lenksäulengehäuse 6 ein so genannter Handmomentensteller 61 untergebracht, der dem Fahrer eine Rückmeldung über die Fahrsituation in Form eines in die Lenkwelle 4 eingetragenen Drehmoments gibt. Über ein Verbindungskabel 7 ist die Lenksäule 2 mit der Lenkbetätigung 3 verbunden. Diese umfasst ein Lenkbetätigergehäuse 8 mit einem Lenkmotor 9, der ein Ritzel 10 antreibt, welches seinerseits in Eingriff mit einer Zahnstange 11 steht, die auf zwei Spurstangen 12 einwirkt, mit denen die Fahrzeugräder 13 verschwenkt werden können. Im Lenkbetätigergehäuse 8 ist ein nicht gezeigter Drehmomentaufnehmer untergebracht, der das für die Verschwenkung der Fahrzeugräder 13 erforderliche Drehmoment misst und als Rückmeldung für den Fahrer an die Lenksäule 2 weiterleitet. Der Lenkbetätiger 3 kann alternativ auch als sogenannte Einzelradlenkung ausgebildet sein, bei der die Fahrzeugräder 13 unabhängig voneinander verschwenkbar sind.

Figur 2 zeigt einen wesentlichen Teil der Lenksäule 2 mit dem Lenksäulengehäuse 6, in dem die Lenkwelle 4 drehbar gelagert ist. Das Lenksäulengehäuse 6 ist verschwenkbar an einer Trageinheit 14 gehalten, wobei die Trageinheit 14 mit einem Fahrzeug verbindbar ist. Die Lenksäule 2 umfasst ein inneres Mantelteil 15, in welchem die Lenkwelle 4 drehbar gelagert ist, wobei das innere Mantelteil 15 in einem äußeren Mantelteil 16 aufgenommen ist und gegenüber diesem in Richtung der Längsachse, auch als Axialrichtung 17 bezeichnet, verschoben werden kann. Zur Fixierung des inneren Mantelteils 15 gegenüber dem äußeren Mantelteil 16 ist eine Zuspannvorrichtung 18 vorgesehen, die das mit einem Schlitz 19 versehene äußere Mantelteil 16 zusammenspannt, so dass das innere Mantelteil 15 im äußeren Mantelteil 16 festgeklemmt ist. Zum Spannen und Lösen der Zuspannvorrichtung 18 ist ein Bedienungshebel 20 vorgesehen. Das Lenksäulengehäuse 6 umfasst in diesem Ausführungsbeispiel das äußere Mantelteil 16 und das innere Mantelteil 15. Es kann jedoch vorgesehen sein, dass das Lenksäulengehäuse 6 nur aus einem einzigen Mantelteil gebildet ist, beispielsweise, wenn eine nicht-verstellbare Lenksäule oder lediglich höhenverstellbare Lenksäule realisiert ist. Das Lenksäulengehäuse 6 ist dadurch bestimmt, dass es die Lenkwelle direkt oder indirekt trägt bzw. drehbar lagert.

Das Lenksäulengehäuse 6 hat einen dem Lenkrad 5 abgewandten Endabschnitt 21, in welchem der erfindungsgemäße Umdrehungsbegrenzer 22 untergebracht ist.

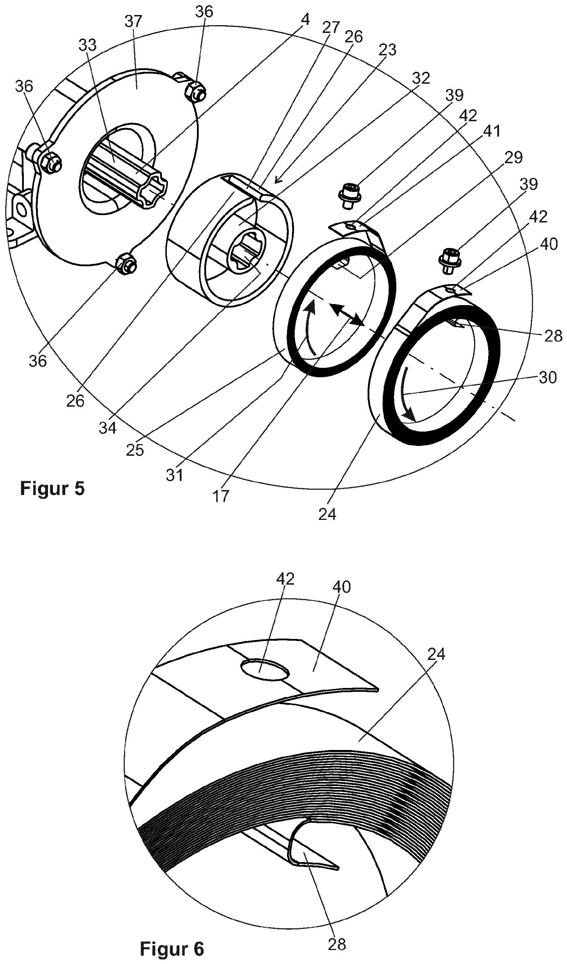

Der Umdrehungsbegrenzer 22 besteht aus einem Kopplungsteil 23, auf dem zwei gegensinnige Flachspiralfedern 24, 25 in Axialrichtung 17 nebeneinander angeordnet sind. Das Kopplungsteil 23 hat einen radial außen angeordneten, zylindrischen, mit der Lenkwelle 4 koaxialen Koppelabschnitt 26, auf dem die gegensinnigen Flachspiralfedern 24, 25 in Axialrichtung 17 aufgeschoben werden. Der Koppelabschnitt 26 ist mit einem schlitzförmigen Durchbruch 27 versehen, der in Axialrichtung 17 ausgerichtet ist. Die Flachspiralfedern 24, 25 haben jeweils ein umgebogenes inneres Ende 28, 29. Die inneren Enden 28, 29 greifen in den Durchbruch 27 ein und arretieren die jeweilige Flachspiralfeder 24, 25 in ihre jeweilige Drehrichtung 30, 31. In Figur 5 bezieht sich die Drehrichtung 30 auf die Drehung des inneren Endes 28 der Flachspiralfeder 24. Die Drehrichtung 31 bezieht sich auf die Drehung des inneren Endes 29 der Flachspiralfeder 25.

Das Kopplungsteil 23 besitzt außerdem einen hülsenförmigen Wellenabschnitt 32, der auf seiner der Lenkwelle 4 zugewandten Innenseite ein Profil 34 aufweist, welches komplementär zu dem Profil 33 der Außenseite der Lenkwelle 4 ausgebildet ist. Dadurch ist der Wellenabschnitt 32 mit der Lenkwelle 4 drehmomentschlüssig gekoppelt, wenn er auf die Lenkwelle 4 in Axialrichtung 17 aufgeschoben worden ist. Daher können zwischen der Lenkwelle 4 und dem Wellenabschnitt 32 Drehmomente übertragen werden.

Der Umdrehungsbegrenzer 22 weist außerdem ein Deckelteil 35 auf, welches mittels dreier Gehäuseschrauben 36 an einem Befestigungsflansch 37 befestigt ist. Der Befestigungsflansch 37 ist in dem der Fahrzeugfront zugewandten Endabschnitt 21 der Lenksäule 2 bzw. des Lenksäulengehäuses 6 angeordnet.

Das Deckelteil 35 ist mit zwei Schraubenlöchern 38 versehen, die zum Durchgang von zwei Befestigungsschrauben 39 vorgesehen sind. Die Befestigungsschrauben 39 dienen der Befestigung der äußeren Enden 40, 41 der beiden Flachspiralfedern 24, 25 am Deckelteil 35. Hierfür sind die äußeren Enden 40, 41 jeweils mit einem Schraubenloch 42 versehen. Auf diese Weise sind die äußeren Enden 40, 41 der Flachspiralfedern 24, 25 fest mit dem Deckelteil 35 und dieses wiederum über die Gehäuseschrauben 36 fest mit dem Befestigungsflansch 37 des Lenksäulengehäuses 6 verbunden. Sie bleiben daher ortsfest, wenn sich die Lenkwelle zusammen mit den inneren Enden 28, 29 der Flachspiralfedern 24, 25 dreht. Die erste Flachspiralfeder 24 erstreckt sich mit ihrem äußeren Ende 40 durch eine Öffnung 381 des Deckels 35 hindurch nach außen. Die zweite Flachspiralfeder 25, die gegensinnig zur ersten Flachspiralfeder 24 angeordnet ist, erstreckt sich mit ihrem äußeren Ende 41 durch eine weitere Öffnung 381 des Deckels 35 hindurch nach außen.

Dreht der Fahrer die Lenkwelle 4 in eine erste Drehrichtung 30, so wird auch das drehfest auf der Lenkwelle 4 angeordnete Kopplungsteil 23 gedreht. Dabei nimmt es das im Durchbruch 27 verankerte innere Ende 28 der ersten Flachspiralfeder 24 mit und wickelt dies so lange auf den Koppelabschnitt 26 auf, bis die zur Verfügung stehende Federlänge aufgebraucht ist. Die Windungen der Flachspiralfeder 24 liegen jetzt dicht übereinander, so dass die Feder auf Block geht. Dadurch wird ein hohes Drehmoment von mehr als 250 Nm erzeugt, welches der ersten Drehrichtung 30 entgegen gerichtet ist und eine weitere Drehung der Lenkwelle 4 in die erste Drehrichtung 30 stoppt bzw. blockiert. Dabei kann ein Lenkeinschlag von etwa 540° erreicht werden, bevor der Umdrehungsbegrenzer 22 durch das auf Block gehen der ersten Flachspiralfeder 24 wirksam wird. Umgekehrt bewirkt eine Drehung der Lenkwelle 4 in der der ersten Drehrichtung 30 entgegengesetzten zweiten Drehrichtung 31, dass das im Durchbruch 27 des Koppelabschnitts 26 verankerte innere Ende 29 der zweiten Flachspiralfeder 25 in die zweite Drehrichtung 31 mitgenommen und die Flachspiralfeder 25 auf dem Koppelabschnitt 26 aufgewickelt wird, bis alle Windungen der zweiten Flachspiralfeder 25 dicht aneinander liegen und die zweite Flachspiralfeder 25 auf Block geht. Dabei wird ein hohes Drehmoment entgegen der zweiten Drehrichtung 31 erzeugt, welches die Drehung der Lenkwelle 4 in die zweite Drehrichtung 31 stoppt und blockiert. Auch in dieser zweiten Drehrichtung 31 ist ein maximaler Drehwinkel von 540° vorgesehen, bevor der Umdrehungsbegrenzer 22 die weitere Drehung durch das auf Block gehen der zweiten Flachspiralfeder 25 begrenzt.

Der erfindungsgemäße Umdrehungsbegrenzer 22 zeichnet sich durch einfachen Aufbau und einen ruhigen, geräuscharmen Lauf aus.

### BEZUGSZEICHENLISTE

1 Steer-by-Wire Lenksystem
2 Lenksäule
3 Lenkbetätigung
4 Lenkwelle
5 Lenkrad
6 Lenksäulengehäuse
7 Verbindungskabel
8 Lenkbetätigungsgehäuse
9 Lenkmotor
10 Ritzel
11 Zahnstange
12 Spurstange
13 Fahrzeuggrad
14 Trageinheit
15 inneres Mantelteil
16 äußeres Mantelteil
17 axiale Richtung/Längsachse
18 Zuspannvorrichtung
19 Schlitz
20 Bedienungshebel
21 Endabschnitt
22 Umdrehungsbegrenzer
23 Kopplungsteil
24 Flachspiralfeder
25 Flachspiralfeder
26 Koppelabschnitt
27 Durchbruch
28 inneres Ende
29 inneres Ende
30 Drehrichtung
31 Drehrichtung
32 Wellenabschnitt
33 Profil
34 Profil
35 Deckelteil
36 Gehäuseschrauben
37 Befestigungsflansch
38 Schraubenlöcher
39 Befestigungsschrauben
40 äußeres Ende
41 äußeres Ende
42 Schraubenloch

## Patentansprüche

1. Lenksäule für ein Kraftfahrzeug, umfassend eine um eine Längsachse (17) in einem Lenksäulengehäuse (6) drehbar gelagerte Lenkwelle (4) und einen Umdrehungsbegrenzer (22), der zwei gegensinnige Flachspiralfedern (24, 25) aufweist, die wirkungsmäßig zwischen einem auf der Lenkwelle (4) drehfest angeordneten Kopplungsteil (23) und dem Lenksäulengehäuse (6) angeordnet sind, und die in axialer Richtung (17) nebeneinander angeordnet sind, wobei zur Umdrehungsbegrenzung die weitere Drehung der Lenkwelle (4) dadurch blockiert wird, dass eine der beiden Flachspiralfedern (24) aufgewickelt wird, bis deren Windungen fest aufeinander liegen und die Flachspiralfeder (24) auf Block geht, **dadurch gekennzeichnet, dass** das Kopplungsteil (23) einen mit der Lenkwelle (4) koaxialen, äußeren zylindrischen Koppelabschnitt (26) aufweist, auf dem die beiden gegensinnigen Flachspiralfedern (24, 25) in axialer Richtung (17) nebeneinander angeordnet sind, und dass jeweils ein inneres Ende (28, 29) der Flachspiralfedern (24, 25) am Koppelabschnitt (26) befestigt ist.

2. Lenksäule nach Anspruch 1, **dadurch gekennzeichnet, dass** der Koppelabschnitt (26) mit einem schlitzförmigen Durchbruch (27) versehen ist, in den jeweils ein umgebogenes inneres Ende (28, 29) der Flachspiralfedern (24, 25) eingreift.

3. Lenksäule nach einem der vorhergehenden Ansprüche, **dadurch gekennzeichnet, dass** das Kopplungsteil (23) einen hülsenförmigen, auf die Lenkwelle (4) axial aufschiebbaren Wellenabschnitt (32) aufweist, der auf seiner der Lenkwelle (4) zugewandten Innenseite ein zu einem äußeren Profil (33) der Lenkwelle (4) komplementäres Profil (34) aufweist.

4. Lenksäule nach einem der vorhergehenden Ansprüche, **dadurch gekennzeichnet, dass** der Umdrehungsbegrenzer (22) in einem der Fahrzeugfront zugewandten Endabschnitt (21) der Lenksäule (2) angeordnet ist.

5. Lenksäule nach Anspruch 4, **dadurch gekennzeichnet, dass** die äußeren Enden (40, 41) der Flachspiralfedern (24, 25) mittels Befestigungsschrauben (39) an einem Deckelteil (35) befestigt sind, welches seinerseits mit einem im Endabschnitt (21) angeordneten Befestigungsflansch (37) der Lenksäule (2) fest verbunden ist.

6. Lenksäule nach einem der vorhergehenden Ansprüche, **dadurch gekennzeichnet, dass** die Flachspiralfedern (24, 25) in ihrer Länge so bemessen sind, dass sie jeweils einen Lenkradeinschlag in einem Bereich zwischen 360° und 720° nach rechts und nach links erlauben.

7. Lenksäule nach einem der vorhergehenden Ansprüche, **dadurch gekennzeichnet, dass** die Flachspiralfedern (24, 25) zumindest eine abschnittsweise lineare Federcharakteristik aufweisen.

## Claims

1. A steering column for a motor vehicle, comprising a steering shaft (4), mounted rotatably about a longitudinal axis (17) in a steering column housing (6), and a rotation limiter (22), which rotation limiter (22) comprises two oppositely directed flat spiral springs (24, 25), which are operatively arranged between a coupling part (23), disposed in a rotationally secure manner on the steering shaft (4), and the steering column housing (6), and which are arranged next to each other in axial direction (17), wherein for the rotational limitation the further rotation of the steering shaft (4) is blocked by winding up one of the two flat spiral springs (24) until its coils lie firmly one upon the other and the flat spiral spring (24) becomes solidly compressed, **characterized in that** the coupling part (23) comprises an outer cylindrical coupling portion (26), which is coaxial with the steering shaft (4) and on which the two oppositely directed flat spiral springs (24, 25) are arranged side by side in the axial direction (17), and **in that** respectively an inner end (28, 29) of the flat spiral springs (24, 25) is fastened to the coupling portion (26).

2. The steering column as claimed in claim 1, **characterized in that** the coupling portion (26) is provided with a slot-shaped aperture (27), in which respectively a bent-over inner end (28, 29) of the flat spiral springs (24, 25) engages.

3. The steering column as claimed in one of the preceding claims, **characterized in that** the coupling part (23) comprises a sleeve-shaped shaft portion (32), which can be slipped axially onto the steering shaft (4) and which, on its inner side facing the steering shaft (4), comprises a profile (34) complementary to an outer profile (33) of the steering shaft (4).

4. The steering column as claimed in one of the preceding claims, **characterized in that** the rotation limiter (22) is arranged in an end portion (21), facing the vehicle front, of the steering column (2).

5. The steering column as claimed in claim 4, **characterized in that** the outer ends (40, 41) of the flat spiral springs (24, 25) are fastened by means of fastening screws (39) to a cap part (35), which, for its part, is fixedly connected to a mounting flange (37), disposed in the end portion (21), of the steering column (2).

6. The steering column as claimed in one of the preceding claims, **characterized in that** the flat spiral springs (24, 25) are dimensioned in terms of their length such that they respectively allow a steering wheel turning angle within the range between 360° and 720° to the right and left.

7. The steering column as claimed in one of the preceding claims, **characterized in that** the flat spiral springs (24, 25) exhibit an, at least in some sections, linear spring characteristic.

## Revendications

1. Colonne de direction pour un véhicule automobile, comprenant un arbre de direction (4) monté de manière rotative autour d'un axe longitudinal (17) dans un boîtier de colonne de direction (6) et un limiteur de rotation (22), qui présente deux ressorts spiraux plats (24, 25) de sens opposés, qui sont agencés opérationnellement entre une partie d'accouplement (23) agencée de manière immobile en rotation sur l'arbre de direction (4) et le boîtier de colonne de direction (6), et qui sont agencés l'un à côté de l'autre dans la direction axiale (17), la rotation supplémentaire de l'arbre de direction (4) étant bloquée pour limiter la rotation, en ce qu'un des deux ressorts spiraux plats (24) est enroulé jusqu'à ce que ses spires se trouvent fermement les unes sur les autre et que le ressort spiral plat (24) passe à l'état de bloc, **caractérisé en ce que** la partie d'accouplement (23) présente une section d'accouplement cylindrique extérieure (26), coaxiale à l'arbre de direction (4), sur laquelle les deux ressorts spiraux plats (24, 25) de sens opposés sont agencés l'un à côté de l'autre dans la direction axiale (17), et **en ce que** respectivement une extrémité intérieure (28, 29) des ressorts spiraux plats (24, 25) est fixée sur la section d'accouplement (26).

2. Colonne de direction selon la revendication 1, **caractérisée en ce que** la section d'accouplement (26) est munie d'une ouverture en forme de fente (27), dans laquelle s'engage respectivement une extrémité intérieure recourbée (28, 29) des ressorts spiraux plats (24, 25).

3. Colonne de direction selon l'une quelconque des revendications précédentes, **caractérisée en ce que** la partie d'accouplement (23) présente une section d'arbre (32) en forme de manchon, pouvant être enfilée axialement sur l'arbre de direction (4), qui présente sur son côté intérieur tourné vers l'arbre de direction (4) un profil (34) complémentaire d'un profil extérieur (33) de l'arbre de direction (4).

4. Colonne de direction selon l'une quelconque des revendications précédentes, **caractérisée en ce que** le limiteur de rotation (22) est agencé dans une section d'extrémité (21) de la colonne de direction (2) tournée vers l'avant de véhicule.

5. Colonne de direction selon la revendication 4, **caractérisée en ce que** les extrémités extérieures (40, 41) des ressorts spiraux plats (24, 25) sont fixées au moyen de vis de fixation (39) à une partie de couvercle (35), qui est elle-même reliée de manière fixe à une bride de fixation (37) de la colonne de direction (2) agencée dans la section d'extrémité (21).

6. Colonne de direction selon l'une quelconque des revendications précédentes, **caractérisée en ce que** les ressorts spiraux plats (24, 25) sont dimensionnés dans leur longueur de telle sorte qu'ils permettent respectivement un braquage du volant dans une plage comprise entre 360° et 720° vers la droite et vers la gauche.

7. Colonne de direction selon l'une quelconque des revendications précédentes, **caractérisée en ce que** les ressorts spiraux plats (24, 25) présentent au moins une caractéristique de ressort linéaire par sections.
